# EUROPEAN PATENT APPLICATION

(11) **EP 4 387 192 A1**
(43) Date of publication of application: **19.06.2024**
(21) Application number: 22214269.7
(22) Date of filing: 16.12.2022
(51) Int. Cl.: H04L 47/24, H04L 47/2483, H04L 47/62, H04L 47/6275, H04L 67/12

(54) **DATA NETWORK AND METHOD FOR SCHEDULING DATA TRAFFIC IN DATA NETWORK**

(71) Applicant: Airbus Operations GmbH, 21129 Hamburg (DE)
(72) Inventor: HEINISCH, Matthias, 21129 Hamburg (DE)
(74) Representative: Isarpatent

(57) **Abstract**

A data network, particularly on board of an aircraft such as a cabin network or a cargo bay network, comprises at least one network communication line, a plurality of network devices connected to the at least one network communication line, and at least one traffic scheduler interconnected between at least some of the plurality of network devices and the at least one network communication line. Each of the plurality of network devices is configured to feed communication messages into the at least one network communication line. The at least one traffic scheduler includes a plurality of message queues, a message valuation module and a queue dispatcher coupled to the plurality of message queues. The message valuation module is configured to assign a message value parameter to communication messages received from the at least some of the plurality of network devices and to queue up the communication messages to respective ones of the plurality of message queues depending on the assigned message value parameter. The queue dispatcher is configured to dispatch the communication messages in the plurality of message queues depending on a priority assignment of each of the plurality of message queues.

## Description

### TECHNICAL FIELD OF THE INVENTION

The invention relates to a data network, particularly for use on board of an aircraft, for example in cabin networks or cargo bay networks. Moreover, the invention relates to a method for scheduling data traffic in a data network, particularly for use on board of an aircraft, for example in cabin networks or cargo bay networks

### TECHNICAL BACKGROUND

Exemplary networking standards, particularly for avionics applications and/or for handling of data in an aircraft, are based on networks that are typically fully compliant with Part 7 of ARINC 664 (one of the standards provided by Aeronautical Radio, Incorporated or "ARINC"). Such networks may for example be switched full duplex networks based on Ethernet network technology (i.e. the IEEE 802.3 standard).

A more generalized approach to interconnectivity between network elements in an aircraft over an Internet-of-Things (IoT) backbone is desirable. Network elements may be flexibly interconnected with each other and may be allowed to communicate freely with each other. However, allowing network elements to send data items and/or messages over the network may lead to undesirable congestion and imbalanced usage of limited network resources. Thus, such flexible interconnectivity requires more sophisticated procedures for efficient allocation of limited network resources.

Document CN 109 960 585 A1 discloses a resource scheduling method for calculating all the resources in the cluster by a fixed rule. The scores are generated by a dynamic priority algorithm. Document US 10 664 174 B2 discloses a resource allocation system dynamically allocates computing resources, such as data path bandwidth, processor priority, CPU cores, memory, and processing threads to the various transaction processors and components to improving the overall processing throughput, resource utilization, and efficiency of the multi-transaction processor system. Document US 2006/0167703 A1 discloses a dynamic resource allocation platform for allocation of time related resources. Document US 9 798 877 B2 discloses a resource allocation method for allocating resources to processes based on security risk and determining a resource allocation priority based on the risk scores of each of the processes. Document US 2017/0310625 A1 discloses a prioritized messaging system, determined based on weighted priority rules. Document CN 108 259 390 A1 discloses a priority method for pushing and device of virtual channel in interconnection bus. Document US 9 473 439 B2 disclose a message processing method for processing messages in an electronic messaging system using a reputation score method.

### SUMMARY OF THE INVENTION

One of the objects of the invention is to find improved solutions for managing network resources in a data network with flexibly allocated network elements.

In pursuit of those objects, the intention is to regulate excessive or imbalanced usage of shared network resources and services, such as bandwidth, processing power, memory, traffic throughput, quality of service (QoS) and other service parameters, by defining scheduling of inbound data traffic by proxy of message value. This approach is facilitated by dedicated traffic schedulers pre-installed in the data network at ingress nodes for data traffic provided by network devices outside the scope and sphere of influence of the network integrator. Unlike direct attribution of message value at the network device level or static allocation of fixed network resources to such network devices, the traffic schedulers may attribute resources dynamically according to the current and potentially changing requirements.

The attribution of limited shared network resources to network devices communicating within the data network by proxy of static message value definitions in central traffic schedulers under control by the network integrator allows for adaptation to different setups and for adjustment of the resource allocation procedure dynamically upon unforeseen changes in the network setup.

One of the advantages of this procedure is to avoid discouraging network devices to send potentially valuable data into the data network even if there currently might not be a use case. While the traffic schedulers may be set up to assign low message value to such currently unusable data, a network integrator may flexibly and easily re-adapt message valuation at a later point in time depending on dynamically changing use cases. Such re-adaption of message valuation at the level of the traffic schedulers is much easier to be implemented than a complex reassignment of statically allocated network resources to all network participants. It may equally be possible that the message valuation policy is flexible enough in itself that changing boundary conditions do not lead to a need for an active re-adaption of the message valuation.

This is particularly helpful in scenarios where a rapid response to changing use cases is desired, such as for example emergency scenarios. In such scenarios the traffic schedulers may become aware of the need or interest of receiving network devices in a particular type of communication messages and/or type of data, allowing the traffic schedulers to adjust their message valuation policies in line with the rapidly changing demand on the receiving end in the data network. Advantageously, this approach will render the network design of the data network future-proof, even when particular use case scenarios cannot or will not be anticipated at the time of network design.

Therefore, according to a first aspect of the invention, a data network, particularly on board of an aircraft, such as a cabin network or a cargo bay network, comprises at least one network communication line, a plurality of network devices connected to the at least one network communication line, and at least one traffic scheduler interconnected between at least some of the plurality of network devices and the at least one network communication line. Each of the plurality of network devices is configured to feed communication messages into the at least one network communication line. The at least one traffic scheduler includes a plurality of message queues, a message valuation module and a queue dispatcher coupled to the plurality of message queues. The message valuation module is configured to assign a message value parameter to communication messages received from the at least some of the plurality of network devices and to queue up the communication messages to respective ones of the plurality of message queues depending on the assigned message value parameter. The queue dispatcher is configured to dispatch the communication messages in the plurality of message queues depending on a priority assignment of each of the plurality of message queues.

According to a second aspect of the invention, a method for scheduling data traffic in a data network, particularly on board of an aircraft, comprises the steps of: receiving, by a traffic scheduler, communication messages from a plurality of network devices; assigning, by a message valuation module of the traffic scheduler, a message value parameter to the received communication messages; queuing up, by the message valuation module of the traffic scheduler, the communication messages to respective ones of a plurality of message queues depending on the assigned message value parameter; and dispatching, by a queue dispatcher of the traffic scheduler coupled to the plurality of message queues, the communication messages in the plurality of message queues to at least one network communication line of the data network depending on a priority assignment of each of the plurality of message queues.

According to a third aspect of the invention, an aircraft, in particular a passenger aircraft, comprises a data network according to the first aspect of the invention, specifically a cabin network or a cargo bay network.

Advantageous configurations and refinements will become understood from the further dependent claims and from the description with reference to the figures.

According to some embodiments of the first aspect of the invention, the data network may further comprise a network storage device connected to the at least one network communication line. The network storage device may be configured to at least temporarily store data contained in communication messages sent by at least some of the plurality of network devices.

According to some embodiments of the first aspect of the invention, the at least one traffic scheduler may further include a policy rule storage coupled to the message valuation module and the queue dispatcher. The policy rule storage may be configured to store static policy rules with regard to dispatching and valuation of the communication messages.

According to some embodiments of the first aspect of the invention, the data network may further comprise a rule configuration manager coupled to the at least one traffic scheduler. The rule configuration manager may be configured to adapt the stored static policy rules in the policy rule storages of the at least one traffic scheduler.

According to some embodiments of the first aspect of the invention, the data network may further comprise a priority manager coupled to the at least one traffic scheduler. The priority manager may be configured to adjust the dispatch priority of the communication messages in the plurality of message queues of the at least one traffic scheduler based on the identity of the sending network devices.

According to some embodiments of the first aspect of the invention, the data network may be a wirebound network, where the communication messages sent by the plurality of network devices are IPv4 packets, IPv6 packets, Ethernet Powerlink packets, PPPoE packets, or MPLS packets.

According to some embodiments of the second aspect of the invention, the traffic scheduler may include a policy rule storage coupled to the message valuation module and the queue dispatcher. The policy rule storage may be configured to store static policy rules with regard to dispatching and valuation of the communication messages.

According to some embodiments of the second aspect of the invention, the method may further comprise the step of adapting, by a rule configuration manager coupled to the at least one traffic scheduler, the stored static policy rules in the policy rule storage of the traffic scheduler.

According to some embodiments of the second aspect of the invention, the method may further comprise the step of adjusting, by a priority manager coupled to the at least one traffic scheduler, the dispatch priority of the communication messages in the plurality of message queues of the traffic scheduler based on the identity of the sending network devices.

Although here, in the foregoing and also in the following, some functions are described as being performed by modules or network elements, it shall be understood that this does not necessarily mean that such modules are provided as entities separate from one another. In cases where one or more modules are provided as software, the modules may be implemented by program code sections or program code snippets, which may be distinct from one another but which may also be interwoven or integrated into one another.

Similarly, in cases where one or more modules are provided as hardware, the functions of one or more modules may be provided by one and the same hardware component, or the functions of several modules may be distributed over several hardware components, which need not necessarily correspond to the modules. Thus, any apparatus, system, method and so on which exhibits all of the features and functions ascribed to a specific module shall be understood to comprise, or implement, said module.

The above configurations and refinements may be combined with one another as desired where expedient. Further possible embodiments, refinements and implementations of the invention also encompass combinations, which are not explicitly mentioned, of features of the invention described above or below with regard to the exemplary embodiments. In particular, a person skilled in the art will also add individual aspects as improvements or additions to the respective basic form of the present invention.

### BRIEF SUMMARY OF THE DRAWINGS

The present invention will be discussed in more detail below on the basis of the exemplary embodiments shown in the schematic figures. In the figures:
Fig. 1 schematically illustrates a block diagram of the logical structure of a data network with traffic schedulers according to some embodiments of the invention;
Fig. 2 schematically illustrates a block diagram of a traffic scheduler that may be used in the data network of Fig. 1 according to some embodiments of the invention;
Fig. 3 schematically illustrates an aircraft having a data network with traffic schedulers according to a further embodiment of the invention; and
Fig. 4 shows a flowchart of a method for scheduling data traffic in a data network according to some embodiments of the invention.

The attached figures are intended to provide improved understanding of the embodiments of the invention. They illustrate embodiments and serve, in conjunction with the description, for the explanation of principles and concepts of the invention. Other embodiments, and many of the stated advantages, will emerge with regard to the drawings. The elements of the drawings are not necessarily shown true to scale relative to one another. Direction-indicating terminology such as, for instance, "top", "bottom", "left", "right", "above", "below", "horizontal", "vertical", "front", "rear" and similar indications are used only for explanatory purposes and do not serve to restrict the generality to specific configurations as shown in the figures.

In the figures of the drawing, elements, features and components which are identical, functionally identical and of identical action are denoted in each case by the same reference designations unless stated otherwise.

### DESCRIPTION OF EXEMPLARY EMBODIMENTS

The detailed description includes specific details for the purpose of providing a thorough understanding of the present invention. However, it will be apparent to those skilled in the art that the present invention may be practised without these specific details.

As used herein, network devices or network elements include any type of equipment, device, apparatus or system capable of communicating in a data network using communication messages. Data networks within the meaning of the present disclosure include a plurality of network devices capable of communicating among each other using communication messages. The network devices or network elements are nodes in the network connected to one or more network communication lines configured to exchange data and control messages. Such network devices or network elements may generally include a processor, a local memory, and a communications interface to communicate with other network devices or network elements over one or more of the network communication lines. The processor, the local memory and the communications interface may be implemented with general purpose elements that are (re-)programmable to a certain extent, for example via corresponding configuration software.

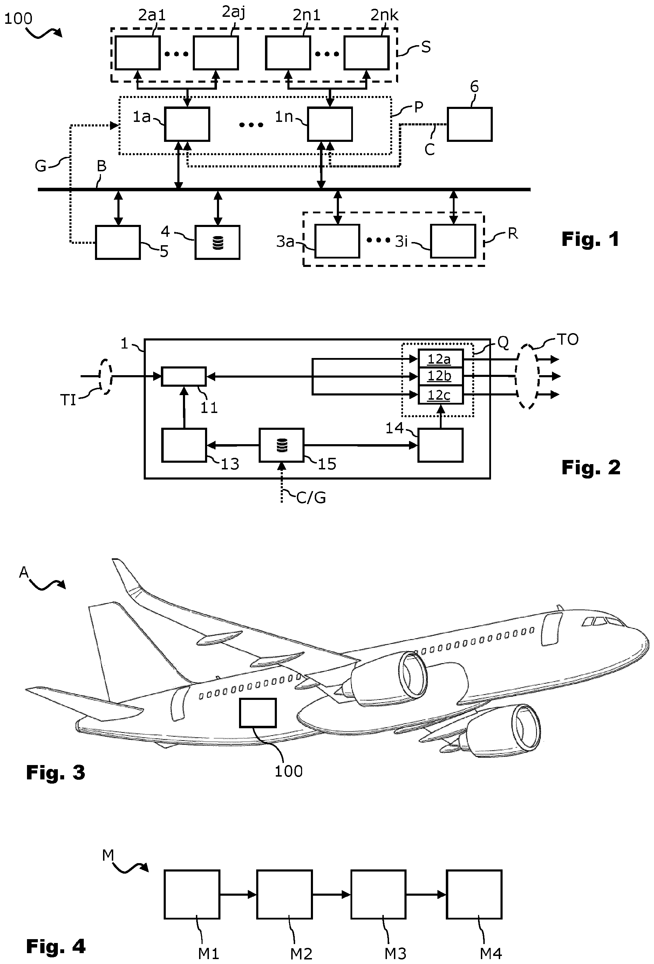

Fig. 1 schematically illustrates a block diagram of the logical structure of a data network 100. The data network 100 as illustrated and explained in conjunction with Figs. 1 and 2 may in particular be a data network 100 on board of an aircraft, such as for example the aircraft A as exemplarily shown in Fig. 3. The data network 100 may in some cases be a cabin network, a cargo bay network or any other similar network used for data and possibly control signal communication on board of an aircraft A, such as a cargo or passenger aircraft.

The data network 100 includes a number of communication lines interconnecting network devices among each other. Exemplarily, a network backbone B is shown in Fig. 1, however, it should be understood that other network topologies, including star topologies, daisy-chain topologies, mesh topologies, ring topologies and hybrid forms thereof may be equally employed.

The data network 100 includes network devices 2a1 to 2aj, with j being any natural number, as well as 2n1 to 2nk, with k being any natural number. The network devices 2a1 to 2aj and 2n1 to 2nk may collectively be referred to as group S of network devices that are communicating within the data network by sending communication messages. Without limitation of generality, recipients of the communication messages may be either one or more of the sending network devices 2a1 to 2aj and 2n1 to 2nk or other network devices not within the group S, such as network devices 3a to 3i. Exemplarily, two network devices 3a to 3i not within the group S, but in a recipient group R are depicted, however, it should be understood that any number of network devices 3a to 3i in the recipient group R may equally be possible.

The network devices 2a1 to 2aj and 2n1 to 2nk may generally send communication messages in any form, size, sending frequency, content and number, and the network devices may send out communication messages independent of each other. Thus, the data traffic made up by communication messages injected by the group S of network devices into the data network 100 may be highly fluctuating, both in quantity and type of messages. Commonly used resources in the data network 100, such as communication lines like the network backbone B, a common network storage device 4 and/or network devices 3a to 3i in the recipient group R may be limited so that this highly fluctuating data traffic may lead to congestion, delays and/or timeouts with respect to critical or essential data to be delivered.

The data network 100 therefore includes a number of traffic schedulers 1a to 1n that are interconnected between one or more network devices in the group S and commonly used communication lines in the network, such as for example the network backbone B. The network backbone B may for example be an Ethernet backbone. Control signals and/or data signals may be conveyed over the network backbone B using one or more of IPv4 packets, IPv6 packets, Ethernet Powerlink packets, PPPoE packets or MPLS packets. Although only a single network backbone B is depicted, more than one network backbone B may be implemented, for example to increase the data throughput, to separate different signal routing directions, to separate payload and control signal planes and/or to be able to implement different signalling protocols. Moreover, the number of traffic schedulers 1a to 1n may equal to n - as illustrated -, with n being a natural number.

The traffic schedulers 1a to 1n may be arranged in a (virtual) scheduler grid P which may installed in the data network 100 at pre-defined distributed physical locations. The virtual scheduler grid P is part of pre-installed network components along with the common network storage device 4. For example, in case of a scheduler grid P on board of an aircraft - such as the aircraft A depicted in Fig. 3 -, the plurality of traffic schedulers 1a to 1n may be distributed over a certain part of the aircraft, such as the passenger cabin, the cargo bays and/or functional parts like the galley, the cockpit or the crew member area. The common network storage device 4 may, for example, be implemented in a central network hub of the aircraft A such as a server rack in an avionics equipment bay.

The common network storage device 4 is configured to at least temporarily store data contained in communication messages sent by at least some of the group S of network devices. The network devices may for example send status indicators, sensor measurement values or other data items as data streams or data flows to the common network storage device 4 via the network backbone B. The common network storage device 4 may be a ring buffer or a random access memory (RAM) and may be configured to route any subset of stored data items as data streams or data flows over the network backbone B. Data may be transferred automatically, continuously and/or in a publish/subscribe model.

In some implementations, the common network storage device 4 may be prompted to do so by corresponding request messages transmitted to the common network storage device 4 by any network participant in the data network 100. The requested stored data items may in either case be transmitted over the network backbone B to dedicated network devices. Such network devices may comprise data interfaces for receiving data streams of data items from the common network storage device 4 upon request.

In some implementations, the common network storage device 4 may collate a number of gathered data items of different ones of the plurality of network participants. Data items that may be useful to collate may, for example, be sensor measurement values measured by similar types of sensors at different locations or measurement values or complementing types of sensors that may be synchronized by their corresponding time-stamps and physical network device locations of the sending network devices. Such collated sets of gathered data items may then be output over the network backbone B to a requesting network participant.

Referring to Fig. 2, a block diagram of the internal structure of a traffic scheduler 1 is depicted. The traffic schedulers 1a to 1n may all be implemented like the traffic scheduler 1 of Fig. 2. The traffic scheduler 1 includes a message buffer 11 in which inbound data traffic TI is collected for further processing. The inbound data traffic TI consists of the communication messages of network devices coupled to the specific traffic scheduler 1. For example, in Fig. 1 a first traffic scheduler 1a is responsible for processing the communication messages of the network devices 2a1 to 2aj, whereas a second traffic scheduler 1n is responsible for processing the communication messages of the network devices 2n1 to 2nk.

The message buffer 11 is monitored and controlled by a message valuation module 13. The message valuation module 13 is configured to assign a message value parameter to communication messages in the message buffer 11 as received from the respective network devices. A policy rule storage 15 is coupled to the message valuation module 13 and the policy rule storage 15 stores static policy rules with regard to valuation of the communication messages. The static policy rules in the policy rule storage 15 may be adapted or altered by configuration data C received from a rule configuration manager 6 of the data network 100 that is coupled to the virtual grid P of traffic schedulers. By means of the rule configuration manager 6, a network integrator or network controller may adjust the respective message valuation policies.

The message valuation module 13 may also implement artificial intelligence (Al) functionality, i.e. the message valuation module 13 may include an neural network that may be trained during operation, for example by reinforcement learning procedures. Such reinforcement learning defines a dynamically evolving shaping of a set of policies under the influence of dynamic environments. Simulation through reinforcement learning leads to the development of policies for message valuation under certain boundary conditions, thus association a valuation action for a given message type and content that leads to optimal results in the currently prevailing environment. Depending on the accentuation of the reinforcement learning process, an appropriate message valuation may be a value parameter assignment that leads to the most efficient, most preferred, most cost neutral and/or most resource saving result under the given circumstances.

Based on the assigned message value parameters, the various communication messages are routed from the message buffer 11 to different ones of a plurality of message queues 12a to 12c in the traffic scheduler 1. Exemplarily, a number of three message queues is shown in Fig. 2, however, any other number message queues is equally possible as well. The plurality of message queues 12a to 12c are part of a queue module Q that is controlled by a queue dispatcher 14 coupled to the plurality of message queues 12a to 12c.

The queued up communication messages in the plurality of message queues 12a to 12c are dispatched by the queue dispatcher 14 depending on a priority assignment of each of the plurality of message queues 12a to 12c. Without limitation of generality, the message queue 12a may be a high priority queue, the message queue 12b may be a medium priority queue, and message queue 12v may be a low priority queue. The queue dispatcher 14 may apply a dispatch policy based on static poly rules stored in the policy rule storage 15 coupled to the queue dispatcher 14. The dispatched communication messages from the queue module Q form the outbound data traffic TO that is fed into the data network 100 and to the respective recipients, such as for example the network devices 3a to 3i in the recipient group R, the common network storage device 4 and/or other sending network devices in the group S.

While the policy rules with respect to message valuation and message dispatching in the traffic scheduler 1 may be agnostic regarding sender and/or recipient, it may be possible in some implementations to adapt the policies according to sender valuation. To that end, the data network 100 may include a priority manager 5 that is coupled to the virtual grid P or traffic schedulers. The priority manager 5 may manage a credit-based policy system for distinguishing between the priority valuation of different senders. Irrespective of whether the traffic scheduler 1 acts sender agnostic or not, all network devices participating in the data network 100 may be equipped with digital identity certificates, and the network devices may use gained credits with the priority manager 5 to up the dispatch priority of the communication messages in the plurality of message queues 12a to 12c. Credits may be obtained under various circumstances, such as external credit allotment (for example by a network integrator), credit auctioning, credit purchase by the network devices or other credit emission schemes.

Fig. 4 shows a flowchart of a method M for scheduling data traffic in a data network. The method M may for example be used in a data network 100 as shown and explained in conjunction with Figs. 1 and 2. The method M may in particular be used on board of an aircraft, such as the aircraft A of Fig. 3.

In a first step M1, a traffic scheduler 1a to 1n in the data network 100 receives communication messages from a plurality of network devices 2a1, ..., 2aj; 2n1, ..., 2nk connected to the traffic scheduler 1a to 1n. The traffic scheduler 1a to 1n includes a message valuation module 13 that assigns, in a second step M2, message value parameters to the received communication messages, based on the message value of the communication messages determined upon static rules defining value of the communication. For example, the static rules implemented in the traffic scheduler 1a to 1n may classify message types having a high demand or providing critical services. Moreover, communication messages sent redundantly in high frequencies or communication messages that are not requested by any other network participant in the data network 100 may receive a lower message value. Additionally, communication messages that claim network resources excessively or that claim network resources without actually using them, may be receive a devalued message value as well.

In a step M3, the message valuation module 13 of the traffic scheduler 1a to 1n queues up the communication messages to respective ones of a plurality of message queues 12a to 12c depending on the message value parameter assigned previously in step M2. The number of queues 12a to 12c may vary and may be ranked according to the priority of the communication messages queued up therein. Such ranking may lead to a priority assignment for each of the plurality of message queues 12a to 12c. A queue dispatcher 14 of the traffic scheduler 1a to 1n coupled to the plurality of message queues 12a to 12c may, in a step M4, dispatch the communication messages in the plurality of message queues 12a to 12c to at least one network communication line, such as for example the network backbone B of the data network 100, depending on a priority assignment of each of the plurality of message queues 12a to 12c.

The queue dispatcher 14 may apply different dispatching rules for dispatching queued up communication messages, such as first-come, first-served (FCFS), last-in first-out (LIFO), non-preemptive or pre-emptive priority servicing, shortest remaining processing time or any hybrid combination thereof.

In order to improve the stringency of the representation, various features were combined in one or more examples in the detailed description above. However, it should be clear in this case that the description above is only of an illustrative and in no way restrictive nature. It is used to cover all alternatives, modifications and equivalents of the various features and exemplary embodiments. Many other examples will be immediately and directly clear to a person skilled in the art on the basis of his technical knowledge in view of the description above.

The exemplary embodiments were chosen and described in order to be able to represent the principles on which the invention is based and their possible uses in practice in the best possible manner. As a result, experts can optimally modify and use the invention and its various exemplary embodiments for the intended purpose. In the claims and the description, the terms "containing" and "having" are used as neutral concepts for the corresponding term "comprising". Furthermore, a use of the terms "a", "an" and "one" is not intended to fundamentally exclude a plurality of features and components described in such a way.

## Claims

1. Data network (100), particularly on board of an aircraft (A), comprising:
at least one network communication line (B);
a plurality of network devices (2a1, ..., 2aj; 2n1, ..., 2nk) connected to the at least one network communication line (B), each of the plurality of network devices (2a1, ..., 2aj; 2n1, ..., 2nk) configured to feed communication messages into the at least one network communication line (B); and
at least one traffic scheduler (1a, ..., 1n) interconnected between at least some of the plurality of network devices (2a1, ..., 2aj; 2n1, ..., 2nk) and the at least one network communication line (B),
the at least one traffic scheduler (1a, ..., 1n) having
a plurality of message queues (12a, ..., 12c),
a message valuation module (13) configured to assign a message value parameter to communication messages received from the at least some of the plurality of network devices (2a1, ..., 2aj; 2n1, ..., 2nk) and to queue up the communication messages to respective ones of the plurality of message queues (12a, ..., 12c) depending on the assigned message value parameter, and
a queue dispatcher (14) coupled to the plurality of message queues (12a, ..., 12c) and configured to dispatch the communication messages in the plurality of message queues (12a, ..., 12c) depending on a priority assignment of each of the plurality of message queues (12a, ..., 12c).

2. Data network (100) according to claim 1, further comprising:
a network storage device (4) connected to the at least one network communication line (B) and configured to at least temporarily store data contained in communication messages sent by at least some of the plurality of network devices (2a1, ..., 2aj; 2n1, ..., 2nk).

3. Data network (100) according to claim 1 or 2, wherein the at least one traffic scheduler (1a, ..., 1n) further includes a policy rule storage (15) coupled to the message valuation module (13) and the queue dispatcher (14), the policy rule storage (15) being configured to store static policy rules with regard to dispatching and valuation of the communication messages.

4. Data network (100) according to claim 3, further comprising:
a rule configuration manager (6) coupled to the at least one traffic scheduler (1a, ..., 1n), the rule configuration manager (6) being configured to adapt the stored static policy rules in the policy rule storages (15) of the at least one traffic scheduler (1a, ..., 1n).

5. Data network (100) according to one of the claims 1 to 4, further comprising:
a priority manager (5) coupled to the at least one traffic scheduler (1a, ..., 1n), the priority manager (5) being configured to adjust the dispatch priority of the communication messages in the plurality of message queues (12a, ..., 12c) of the at least one traffic scheduler (1a, ..., 1n) based on the identity of the sending network devices (2a1, ..., 2aj; 2n1, ..., 2nk).

6. Data network (100) according to one of the claims 1 to 5, wherein the data network (100) is a wirebound network.

7. Data network (100) according to claim 6, wherein the communication messages sent by the plurality of network devices (2a1, ..., 2aj; 2n1, ..., 2nk) are IPv4 packets, IPv6 packets, Ethernet Powerlink packets, PPPoE packets, or MPLS packets.

8. Data network (100) according to one of the claims 1 to 7, wherein the data network (100) is a cabin network or a cargo bay network of an aircraft (A).

9. Aircraft (A) comprising a data network (100) according to claim 8.

10. Method (M) for scheduling data traffic in a data network (100), particularly on board of an aircraft (A), the method (M) comprising:
receiving (M1), by a traffic scheduler (1a, ..., 1n), communication messages from a plurality of network devices (2a1, ..., 2aj; 2n1, ..., 2nk);
assigning (M2), by a message valuation module (13) of the traffic scheduler (1a, ..., 1n), a message value parameter to the received communication messages;
queuing up (M3), by the message valuation module (13) of the traffic scheduler (1a, ..., 1n), the communication messages to respective ones of a plurality of message queues (12a, ..., 12c) depending on the assigned message value parameter; and
dispatching (M4), by a queue dispatcher (14) of the traffic scheduler (1a, ..., 1n) coupled to the plurality of message queues (12a, ..., 12c), the communication messages in the plurality of message queues (12a, ..., 12c) to at least one network communication line (B) of the data network (100) depending on a priority assignment of each of the plurality of message queues (12a, ..., 12c).

11. Method (M) according to claim 10, wherein the traffic scheduler (1a, ..., 1n) includes a policy rule storage (15) coupled to the message valuation module (13) and the queue dispatcher (14), the policy rule storage (15) being configured to store static policy rules with regard to dispatching and valuation of the communication messages.

12. Method (M) according to claim 11, further comprising adapting, by a rule configuration manager (6) coupled to the at least one traffic scheduler (1a, ..., 1n), the stored static policy rules in the policy rule storage (15) of the traffic scheduler (1a, ..., 1n).

13. Method (M) according to one of the claims 10 to 12, further comprising adjusting, by a priority manager (5) coupled to the at least one traffic scheduler (1a, ..., 1n), the dispatch priority of the communication messages in the plurality of message queues (12a, ..., 12c) of the traffic scheduler (1a, ..., 1n) based on the identity of the sending network devices (2a1, ..., 2aj; 2n1, ..., 2nk).

14. Method (M) according to one of the claims 10 to 13, wherein the data network (100) is a cabin network or a cargo bay network.
